# FASCICULE DE BREVET EUROPEEN

(11) **EP 3 914 546 B1**
(45) Date de publication et mention de la délivrance du brevet: **16.11.2022**
(21) Numéro de dépôt: 20700928.3
(22) Date de dépôt: 22.01.2020
(51) Int. Cl.: B65G 47/84

(54) **SYSTEME DE TRI/MANIPULATION DE COLIS OU PAQUETS COMPRENANT UN CONVOYEUR DE TRI A PLATEAUX CHARGE PAR UN CONVOYEUR A LATTES AVEC SABOTS POUSSEURS**
SORTIER-/HANDHABUNGSSYSTEM FÜR VERPACKUNGEN ODER PAKETTEN MIT EINEM SCHALENSORTIERFÖRDERER, DER VON EINEM LAMELLENFÖRDERER MIT SCHUBSCHUHEN BESCHICKT WIRD
PARCEL OR PACKAGE SORTING/HANDLING SYSTEM COMPRISING A TRAY SORTING CONVEYOR LOADED BY A SLAT CONVEYOR WITH PUSHER SHOES

(30) Priorité: 24.01.2019 FR 1900621
(43) Date de publication de la demande: 01.12.2021
(73) Titulaire: Solystic, 92220 Bagneux (FR)
(72) Inventeur: RIEU, Jean, 07800 SAINT GEORGES LES BAINS (FR); BEAUGRAND, Wilfrid, 26000 VALENCE (FR)
(74) Mandataire: IP Trust
(86) Numéro de dépôt international: PCT/EP2020/051478
(87) Numéro de publication internationale: WO 2020/152205

(56) Documents cités:
- WO-A1-2016/014196
- FR-A1- 2 266 647
- JP-A- S 571 115
- US-A- 4 709 529

## Description

### Domaine technique

Le domaine de l'invention est celui des équipements de tri de colis ou paquets, et plus particulièrement des "petits paquets import" appelés ci-après "PPI".

Les PPI sont considérés comme des petites marchandises de faible valeur.

Ils sont triés et acheminés en quelques jours ce qui amène à concevoir des centres logistiques de tri/manipulation à grande échelle capables de trier plusieurs centaines de milliers de PPI par jour sur des dizaines de milliers de destinations différentes.

On connaît déjà des convoyeurs de tri à plateaux capables de transporter et trier des paquets très variés. Pour augmenter le débit de ces trieurs, on cherche d'une part à accroître leur vitesse de déplacement et d'autre part à réduire le pas des plateaux. Dans un autre domaine que le tri, US-4709529 divulgue un convoyeur à plateaux qui sert à faire de l'emballage. Le document JP-S 57 1115 A décrit un système de tri de paquets, selon le préambule de la revendication 1, comprenant un convoyeur à plateaux et une unité de chargement des paquets sur les plateaux du convoyeur à raison d'un paquet par plateau, l'unité de chargement comprenant plusieurs pousseurs permettant le chargement des paquets sur les plateaux en mouvement.

Un élément clé de ces convoyeurs de tri à plateaux est l'unité de chargement des plateaux qui doit s'adapter à une vitesse élevée de déplacement des plateaux sur le chemin de convoyage des plateaux ainsi qu'à une largeur effective minimale du plateau par rapport à la dimension maximale des paquets triés. Il est par ailleurs essentiel que cette unité de chargement puisse rejeter un paquet, si nécessaire, sans générer d'arrêt ou perturber le reste du flux de paquets.

Le but de l'invention est donc de proposer un système de manipulation de colis ou paquets et plus spécialement de PPI, comprenant un convoyeur à plateaux avec des plateaux espacés deux à deux à pas constant et une unité de chargement des paquets sur les plateaux du convoyeur à raison d'un paquet par plateau, cette unité étant apte à permettre un chargement précis des paquets sur les plateaux entraînés à vitesse constante avec la contrainte qu'un paquet peut avoir des dimensions proches de celles d'un plateau et également avec la contrainte que le pas d'espacement entre deux plateaux adjacents soit réduit le plus possible pour augmenter le débit global du convoyeur à plateaux et avec la contrainte de pouvoir rejeter un paquet à la volée.

### Résumé de l'invention

A cet effet, l'invention a pour objet un système de tri de colis ou paquets, comprenant un convoyeur de tri à plateaux et une unité de chargement des paquets sur les plateaux du convoyeur à raison d'un paquet par plateau, caractérisé en ce que ladite unité de chargement comprend un convoyeur à lattes avec des lattes qui s'étendent longitudinalement selon une direction perpendiculaire à un côté de chargement latéral du convoyeur à plateaux, en ce que ladite unité de chargement comprend en outre plusieurs sabots pousseurs montés coulissants chacun le long d'une latte du convoyeur à lattes et espacés deux à deux à intervalle régulier, en ce que chaque sabot pousseur est guidé en outre par un rail formant une came sous les lattes du convoyeur à lattes et qui suit une trajectoire en biais de sorte qu'un paquet se présentant sur un premier côté du convoyeur à lattes et face à un sabot pousseur est poussé transversalement sur le convoyeur à lattes pour arriver par un déplacement en biais jusqu'au côté de chargement du convoyeur à plateaux où il est injecté sur un plateau en mouvement du convoyeur à plateaux, et en ce que le rail forme une came comprenant deux boucles de guidage fermées raccordées entre elles par un aiguillage commandé par une unité de contrôle/commande (UCC), une des boucles suivant la trajectoire en biais et l'autre boucle suivant une trajectoire rectiligne passant au-dessus d'un réceptacle (9) des paquets en rejet et l'unité de contrôle/commande étant agencée pour actionner l'aiguillage si elle détecte qu'un paquet en entrée de l'unité de chargement ne peut pas être injecté sur un plateau libre du convoyeur à plateaux de façon à diriger ce paquet vers le réceptacle des paquets en rejet.

Le système de manipulation selon l'invention peut présenter les particularités suivantes :
- le rail formant une came est un rail en boucle fermée.
- le rail comporte une première partie rectiligne et parallèle à l'axe longitudinal du convoyeur à lattes, une seconde partie qui s'étend en biais et une troisième partie en forme de "S".
- l'inclinaison de la seconde partie du rail est de l'ordre de 25 à 35°.
- la courbure entre les première et seconde parties du rail est progressive.
- les lattes du convoyeur à lattes sont espacées avec un pas constant qui est un sous-multiple du pas des plateaux du convoyeur à plateaux.

Un exemple de système de tri/manipulation selon l'invention est illustré par les dessins.

### Présentation sommaire des dessins

La figure 1 illustre de façon très schématique un équipement de tri de paquets qui est montré en vue de dessus avec un système de tri/manipulation selon l'invention.
La figure 2 illustre de façon très schématique en perspective l'unité de chargement pour le système de tri/manipulation selon l'invention illustré sur la figure 1.

### Description des modes de réalisation

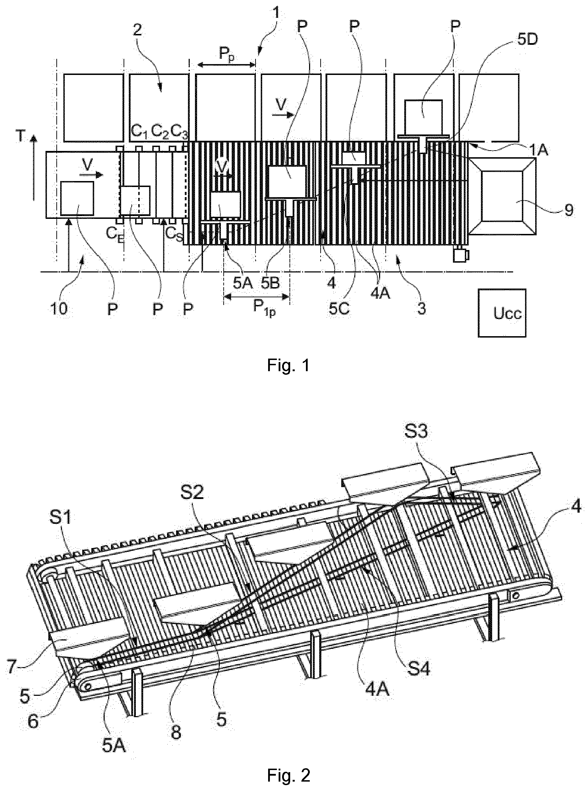

Sur la figure 1, on a illustré donc un équipement de tri de colis ou paquets, ici par exemple des petits paquets import P dits PPI. Ces paquets sont destinés à être livrés à leurs destinataires par un opérateur logistique qui peut être une Poste.

L'équipement de tri de colis ou paquets comprend ici un système de tri/manipulation des paquets selon l'invention avec un convoyeur de tri à plateaux horizontaux 1 ayant des plateaux 2 qui sont ici espacés deux à deux par exemple à pas constant Pp et une unité de chargement 3 des plateaux en paquets.

Le convoyeur à plateaux fonctionne donc comme un trieur, les sorties de tri n'étant pas illustrées sur la figure 1.

Le convoyeur à plateaux peut être de technologie quelconque, à plateaux lisses basculants (connus sous le nom de "tilt-tray ou slide-tray"), à plateaux à bande (connu sous le nom de "cross-belt"), à plateaux ouvrants (connus sous le nom de "split-tray ou bomb-bay") ou encore à plateaux pousseurs (connus sous le nom de "push-tray").

Ces plateaux sont agencés pour déplacer en série à plat ou en position inclinée les paquets P, chaque plateau pouvant être prévu avec une capacité de déchargement du paquet par un levage du plateau sur un côté latéral ou sur un côté frontal.

L'unité de chargement comprend selon l'invention un convoyeur à lattes 4 sur lequel sont montés plusieurs sabots pousseurs comme illustré sur la figure 2.

Comme visible sur la figure 1, les lattes 4A du convoyeur 4 s'étendent longitudinalement entre deux côtés latéraux du convoyeur 4 selon une direction perpendiculaire au convoyeur à plateaux 1 et plus précisément ici selon une direction perpendiculaire à un côté rectiligne 1A du convoyeur 1 où sont chargés latéralement des paquets sur les plateaux.

Les lattes 4A qui sont espacées deux à deux à pas constant peuvent être plus ou moins rapprochées l'une de l'autre ou encore même se chevaucher deux à deux pour éliminer les interstices. Le pas des lattes est un sous-multiple du pas des plateaux du convoyeur à plateaux. La longueur totale du convoyeur à lattes est un multiple du pas du convoyeur à plateaux.

Les convoyeurs 1 et 4 sont des convoyeurs à boucle fermée.

Selon l'invention, les sabots pousseurs 5 dont quatre sont indiqués par 5A à 5D sur la figure 1 sont des sabots montés chacun coulissant le long d'une latte 4A du convoyeur à lattes et sont espacés deux à deux à intervalle régulier sur toute la longueur du trajet en boucle fermée du convoyeur 4, par exemple avec un pas constant Pip identique au pas Pp de séparation des plateaux du convoyeur à plateaux.

L'unité de chargement illustrée sur la figure 2 comporte ici neuf sabots pousseur, cinq sabots pousseurs apparaissent ici sur la face de dessus du convoyeur à lattes et quatre autres sabots pousseurs étant ici disposés sous la face de dessous du convoyeur à lattes de sorte qu'ils ne sont représentés sur la figure 2. Il est entendu que l'unité de chargement peut comprendre moins ou plus de neuf sabots pousseurs sans sortir du cadre de l'invention.

Selon l'invention, chaque sabot pousseur est constitué d'un sabot 6 qui est enchâssé par exemple de façon coulissante le long d'une latte 4A et sur lequel est fixée une lame pousseuse 7 d'une largeur voisine de celle d'un plateau 2, cette lame faisant face au côté rectiligne de chargement 1A du convoyeur à plateaux 1.

Dans le cas où le pas Pip est large, le sabot pousseur peut être scindé en plusieurs sabots coulissants séparés entre eux d'une ou plusieurs lattes, de façon à faciliter le virage en bout de convoyeur à lattes. Dans ce cas, un seul des sabots de chaque pousseur est un sabot pilote en ce qu'il est entraîné par le rail tandis que les autres sabots constitutifs du même pas s'emboîtent dans le sabot pilote en ligne droite de façon à être tractés en parallèle, et se désemboîtent dans les virages.

La surface supérieure du convoyeur à lattes 4 visible sur les figures 1 et 2 surplombe légèrement, le long du côté rectiligne de chargement 1A, la surface supérieure des plateaux 2 ce qui permet le glissement des paquets P du convoyeur à lattes 4 sur les plateaux 2 du convoyeur à plateaux.

Les lattes 4A sont entraînées en mouvement classiquement par deux chaînes en boucle fermée qui sont engrenées sur un motoréducteur alimenté par un variateur de vitesse.

Une unité de contrôle/commande désignée par la référence UCC sur la figure 1 est prévue pour synchroniser la position longitudinale des sabots pousseurs tels que 5A-5D sur celle des plateaux 2 en vis-à-vis en contrôlant les écarts de vitesse de convoyage entre les convoyeurs 1 et 4.

Selon l'invention, chaque sabot 6 (sabot pilote) est par ailleurs guidé en déplacement par un rail 8 formant une came montrée sur la figure 2.

Le rail 8 est un rail en boucle fermée qui suit un certain trajet entre l'extrémité amont et l'extrémité aval du convoyeur à lattes 4 avec un retour vers l'extrémité amont.

Chaque sabot (sabot pilote) peut par exemple être muni d'une roulette qui s'engage dans le rail 8 à travers la sole à lattes du convoyeur 4 et qui agit comme un doigt suiveur de came.

Le rail 8 en boucle fermée présente une première section de guidage des sabots pour injecter les paquets P sur les plateaux 2 qui s'étend essentiellement en biais entre les deux extrémités amont et aval du convoyeur 4 et en se rapprochant du côté de chargement 1A suivant la direction V, cette direction V montrant aussi le sens de déplacement des plateaux 2 et le sens de déplacement des sabots 6 sur le dessus du convoyeur à lattes 4.

Le rail 8 présente une section de retour de guidage des sabots revenant depuis l'extrémité aval du convoyeur 4 vers l'extrémité amont de celui-ci.

Sur la figure 2, les lattes de dessus du convoyeur 4 ont été enlevées pour bien faire apparaître les deux sections du rail 8.

Comme visible sur la figure 2, la section du rail 8 qui sert à injecter les paquets sur les plateaux commence avec une petite partie de longueur S1 qui s'étend parallèlement et à proximité du côté latéral libre du convoyeur 4, puis une plus grande partie de longueur S2 qui s'écarte en biais de ce côté latéral libre pour arriver à proximité de l'autre côté latéral du convoyeur 4 adjacent au côté rectiligne de chargement 1A, une petite partie de longueur S3 en forme de S ce qui permet à la fois d'obtenir un débordement des lames 7 des sabots pousseurs au-delà du bord du côté rectiligne de chargement 1A et jusqu'au-dessus d'un plateau 2 du convoyeur à plateaux 1 comme illustré sur la figure 1 avec le sabot pousseur 5D, mais aussi de ramener ensuite chaque sabot avec la lame vers l'intérieur pour son retour à l'extrémité amont du convoyeur à lattes 4 via la partie S4.

La première section S1 est rectiligne et parallèle à l'axe longitudinal du convoyeur à lattes. Sa longueur est au moins égale à un pas Pip.

L'inclinaison du biais de la partie S2 peut être de l'ordre de 25 à 35°. La courbure du rail entre les sections S1 et S2 est progressive de façon à éviter tout-à-coup d'accélération transverse des paquets.

La seconde section S4 de retour du rail qui s'étend entre l'aval et l'amont du convoyeur 4 s'étend également en biais comme cela apparait sur la figure 2.

Avantageusement, le rail de guidage 8 peut comprendre deux boucles fermées raccordées entre elles par un aiguillage (non illustré) commandé par l'unité UCC. Une des deux boucles est constituée par les parties S1 ,S2, S3 et S4 du rail qui servent à l'injection des paquets P sur les plateaux tandis que l'autre boucle non illustrée sur les figures suit une trajectoire en boucle fermée essentiellement rectiligne en longeant de près le côté libre du convoyeur à lattes 4 et en passant au-dessus du réceptacle 9 montré sur la figure 1 qui sert de réceptacle pour réceptionner des paquets en rejet, à savoir des paquets qui ne peuvent pas être injectés sur un plateau 2 du convoyeur 1.

Comme indiqué plus haut, les figures 1 et 2 ne montrent que les éléments visibles de l'unité de chargement selon l'invention depuis le dessus du convoyeur 4 mais il faut comprendre que cette unité de chargement se présente comme un manège.

Sur la figure 1, on a aussi illustré en amont du convoyeur à lattes 4 un magasin 10 de préparation des paquets P pour les mettre en ligne référencés du côté libre du convoyeur à lattes 4, en étant espacés deux à deux avec un pas constant égal à Pp et Pip à l'aide de jeux de capteurs C et d'un convoyeur constitué de plusieurs sections indépendantes entraînées à vitesse variable qui alimente le convoyeur à lattes 4 tout en recentrant les paquets sur leur pas.

Selon l'invention, l'unité UCC contrôle le magasin d'alimentation 10 pour amener en série un par un les paquets P en entrée du convoyeur à lattes 4 sur le dessus duquel se déplacent en biais les sabots pousseurs 5 espacés deux à deux à pas constant ici avec un même pas d'espacement que les plateaux 2.

Sous l'effet combiné du guidage dans le rail 6 et du glissement sur une latte 4A, chaque sabot pousseur 5 se déplace en biais suivant la direction V ce qui permet à chaque fois de pousser un paquet P vers le côté rectiligne de chargement 1A et de l'injecter sur un plateau 2 libre du convoyeur 1.

Il est entendu que l'unité UCC est agencée pour asservir la vitesse d'alimentation en paquets en entrée du convoyeur 4 avec la vitesse longitudinale de ce convoyeur 4. Egalement l'unité UCC asservit la position des plateaux 2 à la position des sabots pousseurs pour avoir à chaque fois une coïncidence parfaite de trajectoire entre un sabot pousseur 5 et un plateau 2 à charger pour l'injection sur ce plateau d'un paquet poussé par ce sabot pousseur.

Comme on peut le comprendre de la figure 1, les paquets P sont injectés sur les plateaux du convoyeur 1 sensiblement au niveau de l'extrémité avale du convoyeur à lattes 4.

Si l'unité UCC détecte que le paquet courant P détecté en entrée de l'unité de chargement ne peut pas être injecté sur un plateau libre du convoyeur 1, elle actionne l'aiguillage pour que le sabot pousseur 5 présent à l'extrémité amont du convoyeur à lattes et prenant en charge ce paquet courant soit guidé par la seconde boucle du rail 8 de façon à diriger ce paquet vers le réceptacle 9.

Il est entendu que le système de manipulation à convoyeur à plateaux 1 avec des injecteurs à sabots pousseurs 5 peut s'appliquer à différents types de colis ou paquets, y compris des objets postaux.

## Revendications

1. Un système de tri de colis ou paquets, comprenant un convoyeur de tri à plateaux et une unité de chargement des paquets sur les plateaux du convoyeur à raison d'un paquet par plateau, **caractérisé en ce que** ladite unité de chargement comprend un convoyeur à lattes avec des lattes qui s'étendent longitudinalement selon une direction perpendiculaire à un côté de chargement latéral du convoyeur à plateaux, **en ce que** ladite unité de chargement comprend en outre plusieurs sabots pousseurs montés coulissants chacun le long d'une latte du convoyeur à lattes et espacés deux à deux à intervalle régulier, **en ce que** chaque sabot pousseur est guidé en outre par un rail formant une came sous les lattes du convoyeur à lattes et qui suit une trajectoire en biais de sorte qu'un paquet se présentant sur un premier côté du convoyeur à lattes et face à un sabot pousseur est poussé transversalement sur le convoyeur à lattes pour arriver par un déplacement en biais jusqu'au côté de chargement du convoyeur à plateaux où il est injecté sur un plateau en mouvement du convoyeur à plateaux, et **en ce que** le rail forme une came comprenant deux boucles de guidage fermées raccordées entre elles par un aiguillage commandé par une unité de contrôle/commande (UCC), une des boucles suivant la trajectoire en biais et l'autre boucle suivant une trajectoire rectiligne passant au-dessus d'un réceptacle (9) des paquets en rejet et l'unité de contrôle/commande étant agencée pour actionner l'aiguillage si elle détecte qu'un paquet en entrée de l'unité de chargement ne peut pas être injecté sur un plateau libre du convoyeur à plateaux de façon à diriger ce paquet vers le réceptacle des paquets en rejet.

2. Système selon la revendication 1, **caractérisé en ce que** le rail (6) formant une came est un rail en boucle fermée.

3. Système selon la revendication 1, **caractérisé en ce que** le rail (6) comporte une première section (S1) rectiligne et parallèle à l'axe longitudinal du convoyeur à lattes (4), une seconde partie (S2) qui s'étend en biais et une troisième partie (S3) en forme de "S".

4. Système selon la revendication 3, **caractérisé en ce que** l'inclinaison de la seconde partie (S2) du rail est de l'ordre de 25 à 35°.

5. Système selon la revendication 3, **caractérisé en ce que** la courbure entre les première et seconde partie (S1 ,S2) du rail est progressive.

6. Système selon l'une des revendications précédentes, **caractérisé en ce que** les lattes du convoyeur à lattes (4) sont espacées avec un pas constant qui est un sous-multiple du pas des plateaux du convoyeur à plateaux (1).

## Patentansprüche

1. System zum Sortieren von Packstücken oder Paketen, das einen Sortierförderer mit Platten und eine Einheit zum Laden der Pakete auf die Platten des Förderers mit einem Paket pro Platte umfasst, **dadurch gekennzeichnet, dass** die Ladeeinheit einen Lattenförderer mit Latten umfasst, die sich in Längsrichtung in einer Richtung senkrecht zu einer seitlichen Ladeseite des Plattenförderers erstrecken, **dass** die Ladeeinheit ferner mehrere Mitnehmerschuhe umfasst, die jeweils entlang einer Latte des Lattenförderers verschiebbar angebracht und paarweise in regelmäßigen Abständen voneinander beabstandet sind, **dass** jeder Mitnehmerschuh ferner von einer Schiene geführt wird, die unter den Latten des Lattenförderers eine Kurve bildet und einer schrägen Bahn folgt, so dass ein Paket, das sich auf einer ersten Seite des Lattenförderers und gegenüber einem Mitnehmerschuh befindet, quer über den Lattenförderer mitgenommen wird, um durch eine schräge Bewegung zur Beladungsseite des Plattenförderers zu gelangen, wo es auf eine sich bewegende Platte des Plattenförderers geschoben wird, und **dass** die Schiene eine Kurve bildet, die zwei geschlossene Führungsschleifen umfasst, die durch eine Weiche miteinander verbunden sind, die von einer Kontroll-/Steuereinheit (CCU) gesteuert wird, wobei eine der Schleifen der schrägen Bahn und die andere Schleife einer geraden Bahn folgt, die über einen Behälter (9) für aussortierte Pakete verläuft, und die Kontroll-/Steuereinheit so beschaffen ist, dass sie die Weiche betätigt, wenn sie feststellt, dass ein Paket am Eingang der Ladeeinheit nicht auf eine freie Platte des Plattenförderers geschoben werden kann, um dieses Paket in den Behälter für aussortierte Pakete zu leiten.

2. System nach Anspruch 1, **dadurch gekennzeichnet, dass** die eine Kurve bildende Schiene (6) eine Schiene in geschlossener Schleife ist.

3. System nach Anspruch 1, **dadurch gekennzeichnet, dass** die Schiene (6) einen ersten Abschnitt (S1), der geradlinig und parallel zur Längsachse des Lattenförderers (4) verläuft, einen zweiten Teil (S2), der schräg verläuft, und einen dritten Teil (S3) in Form eines "S".

4. System nach Anspruch 3, **dadurch gekennzeichnet, dass** die Neigung des zweiten Teils (S2) der Schiene im Bereich von 25 bis 35° liegt.

5. System nach Anspruch 3, **dadurch gekennzeichnet, dass** die Krümmung zwischen dem ersten und dem zweiten Teil (S1,S2) der Schiene progressiv ist.

6. System nach einem der vorhergehenden Ansprüche, **dadurch gekennzeichnet, dass** die Latten des Lattenförderers (4) mit einer konstanten Steigung beabstandet sind, die einem Divisor der Steigung der Platten des Plattenförderers (1) entspricht.

## Claims

1. System for sorting parcels or packages, comprising a tray sorting conveyor and a unit for loading the packages onto the trays of the conveyor at a rate of one package per tray, **characterized in that** said loading unit comprises a slat conveyor with slats which extend longitudinally in a direction perpendicular to a lateral loading side of the tray conveyor, **in that** said loading unit further comprises a plurality of pusher shoes, each of which is mounted so as to slide along a slat of the slat conveyor and which are spaced apart in pairs with uniform spacing, **in that** each pusher shoe is further guided by a rail that forms a cam under the slats of the slat conveyor and which follows an inclined path so that a package arriving on a first side of the slat conveyor and facing a pusher shoe is pushed transversely on the slat conveyor in order to arrive by an inclined movement at the loading side of the tray conveyor where it is injected onto a moving tray of the tray conveyor, and **in that** the rail forms a cam comprising two closed guide loops that are interconnected by a switch controlled by a monitoring and control unit (UCC), one of loops following the inclined path and the other loop following a rectilinear path going over the top of a receptacle (9) for reject packages and the monitoring and control unit being arranged to actuate the switch if it detects that a package at the inlet of the loading unit cannot be injected onto a free tray of the tray conveyor, in such a manner as to direct said package toward the receptacle for reject packages.

2. System according to claim 1, **characterized in that** the rail (6) forming a cam is a closed-loop rail.

3. System according to claim 1, **characterized in that** the rail (6) comprises a first section (S1) which is rectilinear and parallel to the longitudinal axis of the slat conveyor (4), a second portion (S2) which extends at an incline and a third portion (S3) that is S-shaped.

4. System according to claim 3, **characterized in that** the inclination of the second portion (S2) of the rail is in the range of 25 to 35°.

5. System according to claim 3, **characterized in that** the curvature between the first and the second portion (S1, S2) of the rail is progressive.

6. System according to any of the preceding claims, **characterized in that** the slats of the slat conveyor (4) are spaced apart at a constant pitch which is a sub-multiple of the pitch of the trays of the tray conveyor (1).
